# EUROPEAN PATENT SPECIFICATION

(11) **EP 1 910 098 B1**
(45) Date of publication and mention of the grant of the patent: **26.08.2009**
(21) Application number: 06796238.1
(22) Date of filing: 28.07.2006
(51) Int. Cl.: B60B 21/00

(54) **ADAPTER FOR BICYCLE WHEEL AS WELL AS WHEEL AND KIT COMPRISING SAID ADAPTER**
ADAPTER FÜR EIN FAHRRAD SOWIE RAD UND KIT MIT DIESEM ADAPTER
ADAPTATEUR POUR ROUE DE BICYCLETTE, ROUE ET TROUSSE COMPRENANT LEDIT ADAPTATEUR

(30) Priority: 01.08.2005 IT MI20051504
(43) Date of publication of application: 16.04.2008
(73) Proprietor: Arche S.N.C. di Arpini Claudio E Cherubini Claudio, 26013 Crema (IT)
(72) Inventor: ARPINI, Claudio, I-26013 Crema (IT); CHERUBINI, Claudio, I-26013 Crema (IT)
(74) Representative: Pizzoli, Antonio
(86) International application number: PCT/IT2006/000586
(87) International publication number: WO 2007/015285

(56) References cited:
- DE-A1- 10 137 331
- US-A- 5 746 850
- US-A- 6 145 937

## Description

The present invention relates to an adapter for bicycle wheels, in particular for wheels which can be employed without an inner tube according to the preamble of claim 1. The present invention also relate to a wheel and a kit comprising said adapter.

It is known that in different kinds of bicycle, including the racing, mountain and downhill ones, it can be advantageous to avoid the use of inner tubes. One of said advantages is to avoid that the tube is "pinched" by the edges of the rim and thus broken. This risk is particularly accentuated when the rim hits against corners or other kinds of obstacles. Another advantage is the possibility of inflating the tires at pressures lower than the ones required by the tubes, as, it is sometimes useful on determined grounds.

The elimination of the tube, however, is hampered by several disadvantages. First, the suitable rims and tires, called tubeless or no-tube, are particularly expensive. Furthermore, when a tubeless tire breaks on the way, and it is impossible to repair it on the spot, a tube must be inserted therein anyway for inflating it and continuing the run. This requires the extraction of the preexistent valve from the hole of the rim, for introducing in the same hole the valve of the tube. This operation can be problematic also because the valve, threaded on the outside, during the extraction may damage both the rim and the annular gasket contacting the valve.

In order to avoid the above mentioned cost problems, some systems have been proposed for adapting normal rims and tires to the use without tubes.

A first system consists of internally lining the rim with an inner cover, i.e. with a flap shaped as a tube which is cut in half in a longitudinal direction and is provided with a valve as a normal tube. The flap is adhered to the inside of the rim, on which an adhesive tape of nylon is preventively applied for covering the heads of the spokes or the relevant holes. The valve is inserted into the hole destined thereto. A normal tire, whose seal is assured for a certain period by a suitable sealant, is assembled on the rim lined like that.

This system avoids the costs of the tubeless rims and tires. However it shows itself barely practical when the break of a tire requires the use of a tube. As a matter of fact, the flap is indissolubly joined to the valve, so that for extracting the latter the whole flap, which generally cannot be reused anymore, must be removed. A further disadvantages lies in that the flap, due to the high pressures which is subject to, tends to form bulges near the holes of the spike heads, so that the underlying nylon tape cannot protect it always in an adequate manner. Of course, this causes risks of breaks,

A different adaptation system provides for the application of a double adhesive tape inside the rim, and of a silicon flap thereon, which is provided with a hole through which the valve is then introduced. The tire, on which the necessary sealant is then distributed, is assembled afterwards.

This system, providing for a valve which is not indissolubly joined to the flap, allows its disassemble with a relative easiness. However, its extraction, also due to the outer thread, often damages the rim and causes the detachment of the double adhesive tape as well as the laceration of the flap, whose hole has a diameter smaller than the diameter of the valve for the requirements of the seal. Of course, a lacerated flap cannot be reused. Another disadvantage of this system, as well as of the previous one, lies in the insufficient protection of the flap offered by the double adhesive tape, near the holes of the spike heads. Furthermore, the valve requires a sealing plug which remarkably protrudes inside the rim.

The closest prior art document DE 10137331 A1 discloses an adapter comprising a tubular body provided with a lateral protrusion suitable for abutting against the inner side of the rim, which is tightened between this lateral protrusion and a threaded member. It is difficult to provide this known adapter with a valve, since the latter must be screwed into the tubular body from the outer side of the rim.

US 6145937 discloses a valve assembly which can be provided with a valve inserted in a slidable manner from the inner side of the rim, however this known assembly cannot be fixed to the rim without a threaded member screwed around the valve, so that the substitution of the sole valve is difficult. Furthermore, the valve must be provided with flaps, with the above mentioned disadvantages of the valves with flaps, for avoiding its expulsion from the tubular body.

It is an object of the present invention to produce wheels which can be employed without a tube and which do not have the above disadvantages. Said object is achieved with an adapter, a wheel and a kit, whose main features are disclosed in claims 1, 9 and 10, respectively, while other features are disclosed in the remaining claims.

Thanks to the particular tubular body which is provided with, the adapter according to the present invention allows to avoid a direct contact between the valve and the rim, as well as between the valve and the flap and the other lining members. As a matter of fact, the valve is suitably inserted and housed in the longitudinal seat of the tubular body. If necessary, the valve can be easily removed from the tubular body.

Preferably, a fiber tape, also of the kind normally sold in the stationery shops, can be applied in addition to the double adhesive tape, in order to allow a better protection of the flap close to the holes of the spike heads. It has been surprisingly noticed that such a tape exerts an effective protective action also at very high pressures.

The adapter according to the present invention can be used both on normal wheels, so as to adapt them to the use without a tube, and on tubeless wheels, in order to facilitate the introduction of a tube when required.

Further advantages and features of the adapter according to the present invention will become clear to those skilled in the art from the following detailed and non-limiting description of an embodiment thereof with reference to the attached drawings wherein:
- figure 1 is a partial side view of a bicycle wheel comprising said adapter; and
- figure 2 is a view sectioned along plane II-II of figure 1.

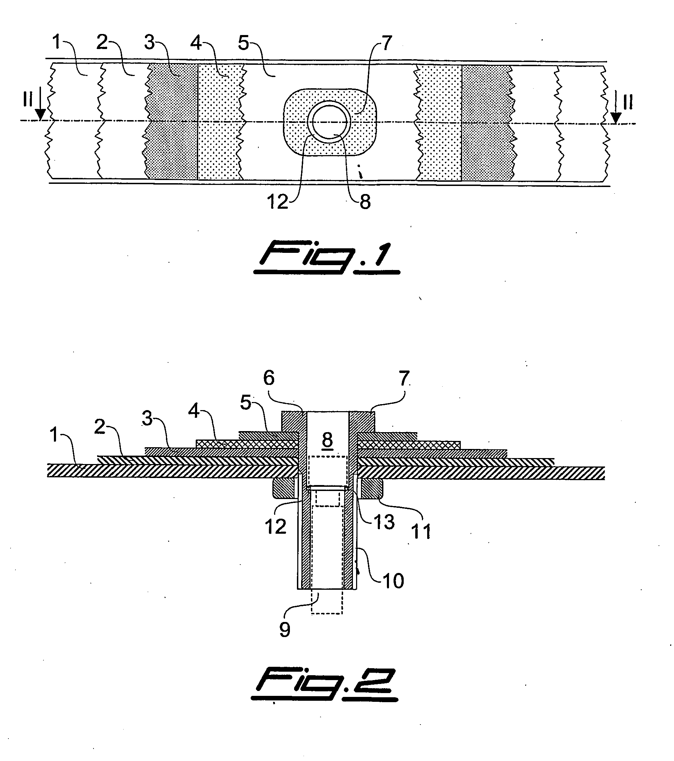

Referring to figures 1 and 2, it is seen that rim 1 of a bicycle wheel comprises in a known way a hole for an air valve which serves for inflating the tire of the wheel. The inner surface of rim 1 is preferably lined by a double adhesive tape 2, on which a fiber tape 3 is arranged. A tape 4 made of a silicone material or another elastomeric material, having an additional protective function and preferably a length of some centimeters, is applied onto tape 3, within the limits of the zone surrounding said hole. A flap 5, which can be made of rubber, rubber reinforced with canvas or another suitable material, is arranged onto the double adhesive tape 2, the fiber tape 3 and the elastomeric tape 4. The double adhesive tape 2, the fiber tape 3, the elastomeric tape 4 and flap 5 are all perforated in correspondence with the hole of rim 1.

The adapter according to the present invention suitably comprises a tubular body 6 which can be inserted into the hole of rim 1 and is provided with a lateral protrusion, in particular a flange 7, suitable for abutting against a side of rim 1, in particular its inner side, already covered by tapes 2, 3 and 4 as well as by flap 5 as above disclosed. The tubular body 6 comprises a longitudinal seat 8 in which a valve 9 (shown with broken lines in figure 2) can be arranged. The end of the tubular body 6 opposite to flange 7 is provided with a thread 10 for screwing a threaded member, in particular a ring 11 or a nut, so as to tighten rim 1 between flange 7 and ring 11 for fixing the tubular body 6 to rim 1. The longitudinal seat 8 of the tubular body 6 comprises a narrowing 12 acting as an abutment for preventing the expulsion of valve 9 from rim 1. An annular gasket 13 is arranged between the head of valve 9 and the inner narrowing 12.

Once the application of tapes 2, 3 and 4 and of flap 5, as well as the assembling of the tubular body 6 and of valve 9, are completed, the tire is assembled and the necessary sealant is applied. The inflation, whose pressure causes valve 9 to urge against gasket 13, which ensures the necessary seal when it is pressed like this, is then performed. Valve 9 can be then locked with an outer ring thereof, in a known way.

When the pressure fails, for example in case of a total or partial disassembly of the tire, valve 9 is not forced anymore into the tubular body 6, so that it can be easily removed from the inside by unscrewing its outer ring, if necessary.

The adapter according to the present invention is particularly simple and economical, and allows to assemble and disassemble valve 9 with the greatest easiness. Since valve 9 does not contact neither rim 1, nor tapes 2, 3 and 4, nor flap 5, its assembly and disassembly cannot damage said components in any way. As explained, the latter contact only the tubular body 6, which remains fixed to rim 1, except for exceptional cases. The components of the adaptor according to the present invention are preferably produced and sold in the form of an adaptation and/or maintenance kit.

Possible variations and/or additions may be made by those skilled in the art to the hereinabove disclosed and illustrated embodiment of the invention while remaining within the scope of the following claims.

## Claims

1. Adapter for bicycle wheels comprising a rim (1) provided with a hole for an air valve (9), which adapter comprises a tubular body (6) which can be inserted into said hole and is provided with a lateral protrusion (7) suitable for abutting against a side of the rim (1), as well as with a thread (10) for a threaded member (11), so as to tighten a portion of the rim (1) between the lateral protrusion (7) and the threaded member (11), said tubular body (6) comprising a longitudinal seat (8) in which said valve (9) can be arranged,
**characterized in that** the longitudinal seat (8) of the tubular body (6) comprises an inner narrowing (12) acting as an abutment for preventing the expulsion of the valve (9) from the rim (1).

2. Adapter according to the previous claim, **characterized in that** the inner narrowing (12) is provided with an annular gasket (13).

3. Adapter according to one of the previous claims, **characterized in that** it comprises an air valve (9) suitable for being inserted into the longitudinal seat (8) of the tubular body (6).

4. Adapter according to the previous claim, **characterized in that** the air valve (9) is locked in the longitudinal seat (8) of the tubular body (6) with an outer ring.

5. Adapter according to one of the previous claims, **characterized in that** the tubular body (6) is arranged in the hole of a flap (5) comprised between said lateral protrusion (7) and said rim (1).

6. Adapter according to one of the previous claims, **characterized in that** the tubular body (6) is arranged in the hole of an elastomeric tape (4) comprised between said lateral protrusion (7) and said rim (1).

7. Adapter according to one of the previous claims, **characterized in that** the tubular body (6) is arranged in the hole of a fiber tape (3) comprised between said lateral protrusion (7) and said rim (1).

8. Adapter according to one of the previous claims, **characterized in that** the tubular body (6) is arranged in the hole of a double adhesive tape (2) comprised between said lateral protrusion (7) and said rim (1).

9. Bicycle wheel, **characterized in that** it comprises an adapter (2, 3, 4, 5, 6) according to one of the previous claims.

10. Adaptation and/or maintenance kit for bicycles, **characterized in that** it comprises an adapter (2, 3, 4, 5, 6) according to one of claims 1 to 8.

## Patentansprüche

1. Adapter für Fahrradräder mit einer Felge (1), die ein Loch für ein Luftventil (9) aufweist, welcher Adapter einen rohrförmigen Körper (6), der in das genannte Loch eingeführt werden kann und mit einem seitlichen Vorsprung (7) versehen ist, der dazu geeignet ist, an einer Seite der Felge (1) anzuschlagen, und ein Gewinde (10) für ein Gewindeteil (11) aufweist, so daß ein Abschnitt der Felge (1) zwischen dem seitlichen Vorsprung (7) und dem Gewindeteil (11) festgespannt werden kann, wobei der rohrförmige Körper (6) einen längsverlaufenden Sitz (8) aufweist, in dem das genannte Ventil (9) angeordnet werden kann, **dadurch gekennzeichnet, daß** der längsverlaufende Sitz (8) des rohrförmigen Körpers (6) eine innere Einschnürung (12) aufweist, die als ein Anschlag wirkt, um das Herausdrängen des Ventils (9) aus der Felge (1) zu verhindern.

2. Adapter nach dem vorstehenden Anspruch, **dadurch gekennzeichnet, daß** die innere Einschnürung (12) einen Dichtring (13) aufweist.

3. Adapter nach einem der vorstehenden Ansprüche, **dadurch gekennzeichnet, daß** er ein Luftventil (9) aufweist, das dazu geeignet ist, in den längsverlaufenden Sitz (8) des rohrförmigen Körpers (6) eingeführt zu werden.

4. Adapter nach dem vorstehenden Anspruch, **dadurch gekennzeichnet, daß** das Luftventil (9) mit einem äußeren Ring in dem längsverlaufenden Sitz (8) des rohrförmigen Körpers (6) verriegelt ist.

5. Adapter nach einem der vorstehenden Ansprüche, **dadurch gekennzeichnet daß** der rohrförmige Körper (6) in dem Loch einer Lasche (5) angeordnet ist, die zwischen dem seitlichen Vorsprung (7) und der Felge (1) liegt.

6. Adpater nach einem der vorstehenden Ansprüche **dadurch gekennzeichnet, daß** der rohrförmige Körper (6) in dem Loch eines elastomeren Bandes (4) angeordnet ist, das zwischen dem seitlichen Vorsprung (7) und der Felge (1) liegt.

7. Adapter nach einem der vorstehenden Ansprüche, **dadurch gekennzeichnet, daß** der rohrförmige Körper (6) in dem Loch eines Faserbandes (3) angeordnet ist, das zwischen dem seitlichen Vorsprung (7) und der Felge (1) liegt.

8. Adapter nach einem der vorstehenden Ansprüche, **dadurch gekennzeichnet, daß** der rohrförmiger Körper (6) in dem Loch eines Doppelklebebandes (2) angeordnet ist, das zwischen dem seitlichen Vorsprung (7) und der Felge (1) liegt.

9. Fahrradrad, **dadurch gekennzeichnet, daß** es einen Adapter (2, 3, 4, 5, 6) nach einem der vorstehenden Ansprüche aufweist.

10. Anpassungs- und/oder Wartungsbausatz für Fahrräder, **dadurch gekennzeichnet, daß** er einen Adapter (2, 3, 4, 5, 6) nach einem der Ansprüche 7 bis 8 aufweist.

## Revendications

1. Adaptateur pour roues de bicyclette comprenant une jante (1) munie d'un trou destiné à une valve (9), lequel adaptateur comprend un corps tubulaire (6) qui peut être inséré dans ledit trou et est muni d'une saillie latérale (7) adaptée pour venir en butée contre un côté de la jante (1), ainsi que d'un pas de vis (10) destiné à un élément fileté (11) de manière à serrer une partie de la jante (1) entre la saillie latérale (7) et l'élément fileté (11), ledit corps tubulaire (6) comprenant un siège longitudinal (8) dans lequel peut être agencée ladite valve (9),
**caractérisé en ce que** le siège longitudinal (8) du corps tubulaire (6) comprend un rétrécissement intérieur (12) agissant comme une butée pour empêcher l'expulsion de la valve (9) à partir de la jante (1).

2. Adaptateur selon la revendication précédente, **caractérisé en ce que** le rétrécissement intérieur (12) est muni d'un joint annulaire (13).

3. Adaptateur selon l'une quelconque des revendications précédentes, **caractérisé en ce qu'**il comporte une valve (9) adaptée pour être insérée dans le siège longitudinal (8) du corps tubulaire (6).

4. Adaptateur selon la revendication précédente, **caractérisé en ce que** la valve (9) est bloquée dans le siège longitudinal (8) du corps tubulaire (6) à l'aide d'un anneau extérieur.

5. Adaptateur selon l'une quelconque des revendications précédentes, **caractérisé en ce que** le corps tubulaire (6) est agencé dans le trou d'un volet (5) compris entre ladite saillie latérale (7) et ladite jante (1).

6. Adaptateur selon l'une quelconque des revendications précédentes, **caractérisé en ce que** le corps tubulaire (6) est agencé dans le trou d'une bande en élastomère (4) comprise entre ladite saillie latérale (7) et ladite jante (1).

7. Adaptateur selon l'une quelconque des revendications précédentes, **caractérisé en ce que** le corps tubulaire (6) est agencé dans le trou d'une bande de fibre (3) comprise entre ladite saillie latérale (7) et ladite jante (1).

8. Adaptateur selon l'une quelconque des revendications précédentes, **caractérisé en ce que** le corps tubulaire (6) est agencé dans le trou d'un ruban adhésif double face (2) compris entre ladite saillie latérale (7) et ladite jante (1).

9. Roue de bicyclette, **caractérisée en ce qu'**elle comporte un adaptateur (2, 3, 4, 5, 6) selon l'une quelconque des revendications précédentes.

10. Ensemble d'adaptation et/ou d'entretien de bicyclette, **caractérisé en ce qu'**il comporte un adaptateur (2, 3, 4, 5, 6) selon l'une quelconque des revendications 1 à 8.
